# FASCICULE DE BREVET EUROPEEN

(11) **EP 0 499 495 B1**
(45) Date de publication et mention de la délivrance du brevet: **09.11.1994**
(21) Numéro de dépôt: 92400052.4
(22) Date de dépôt: 09.01.1992
(51) Int. Cl.: A23L 3/3418, A23L 3/3445, A23B 7/148, A23B 9/20, B01D 53/22

(54) **Procédé de constitution dans une enceinte d'une atmosphère controlée et enceinte à atmosphère controlée.**
Verfahren zum Aufbau einer kontrollierten Atmosphäre in einem Raum und Raum mit kontrollierter atmosphäre
Process for the constitution of a controlled atmosphere in a room and room with controlled atmosphere

(30) Priorité: 14.02.1991 FR 9101739
(43) Date de publication de la demande: 19.08.1992
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Barbe, Christian, F-92260 Fontenay-Aux-Roses (FR)
(74) Mandataire: Le Moenner, Gabriel

(56) Documents cités:
- EP-A- 0 315 309
- EP-A- 0 358 359
- EP-A- 0 368 678
- FR-A- 2 521 402

## Description

La présente invention concerne un procédé de constitution d'une atmosphère contrôlée dans une enceinte et une enceinte pour la mise en oeuvre de ce procédé.

L'invention concerne plus particulièrement un procédé de constitution, dans une enceinte, d'une atmosphère contrôlée, du type comprenant les étapes de fournir un mélange gazeux sous pression à un premier compartiment d'un module de séparation membranaire, de faire circuler dans l'enceinte un premier des mélanges gazeux modifiés issu du module pour constituer l'atmosphère contrôlée, et de recombiner l'atmosphère contrôlée extraite de l'enceinte avec le second des mélanges modifiés émanant du module avant rejet à l'atmosphère environnante.

Un tel procédé est décrit dans le document EP-A-0.358.359, la recombinaison s'effectuant dans la conduite d'évacuation du gaz résiduaire du module de séparation à adsorbant ou à membrane.

La présente invention a pour objet de proposer un procédé perfectionné permettant d'améliorer le fonctionnement et le rendement du module de séparation membranaire, notamment de réduire la surface utile de la membrane et le débit du mélange gazeux sous pression, et donc de réduire l'encombrement du module et ses coûts de fabrication, et de l'intégrer plus aisément dans ou sur les enceintes.

Pour ce faire, selon une caractéristique de l'invention, la recombinaison est effectuée dans le second compartiment du module, typiquement dans le compartiment basse pression, le premier mélange modifié, introduit dans l'enceinte, étant détendu à une pression légèrement supérieure à la pression dans le compartiment basse pression du module, l'atmosphère contrôlée, en provenance de l'enceinte, étant recirculée dans le compartiment basse pression à contre-courant du flux gazeux dans le compartiment haute pression du module.

La présente invention a également pour objet une structure d'enceinte associée à un module de séparation membranaire dans un agencement compact et de faibles coûts de fabrication et d'assemblage.

Pour ce faire, selon une autre caractéristique de l'invention, une telle enceinte, du type comprenant au moins un volume intérieur relié, par un premier conduit, à un premier compartiment d'un module de séparation membranaire connectable à une source de mélange gazeux sous pression, et, par un second conduit, à un orifice de décharge dans l'atmosphère ambiante communiquant avec le second compartiment du module, est caractérisée en ce que le second conduit est constitué au moins partiellement par le second compartiment du module.

Le procédé et l'enceinte selon l'invention trouvent leur application dans la protection contre l'oxydation ou une contamination quelconque de matières premières, notamment de produits alimentaires, de produits semi-finis, en cours de fabrication, ou de produits finis pendant une durée variable en attente de transformation ou de commercialisation, par exemple dans l'industrie de l'électronique secondaire.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique en coupe d'un premier mode de réalisation de l'invention ; et
- la figure 2 est une vue partiellement en coupe et en arraché d'un autre mode de réalisation de l'invention.

Dans la description qui va suivre et sur les dessins, les éléments identiques ou analogues portent les mêmes chiffres de référence.

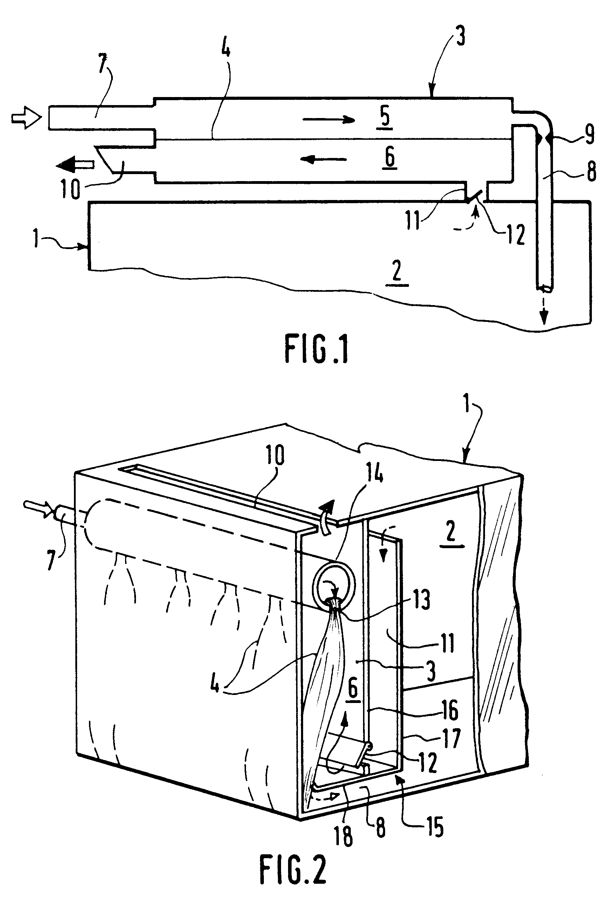

On a représenté sur la figure 1 une partie d'une enceinte sensiblement étanche 1, définissant au moins un volume intérieur 2, associée à un module de séparation par perméation 3 comprenant au moins une membrane de perméation 4 séparant un compartiment amont ou haute pression 5 d'un compartiment aval ou basse pression 6. Le module 3 comporte, à une première extrémité, un embout 7 de raccordement à une source d'un mélange gazeux sous pression, typiquement un réseau de fourniture d'air comprimé industriel à une pression entre 2,5 et 6 x 10⁵ Pa, débouchant dans le compartiment haute pression 5 et, à son autre extrémité, une conduite 8 communiquant avec le compartiment haute pression 5 et s'étendant à l'intérieur du volume 2. La conduite 8 est munie d'une restriction 9 pour réduire la pression du premier mélange gazeux modifié issu du compartiment haute pression 5 du module 3 et introduit dans le volume 2 à une pression légèrement supérieure à celle dans le compartiment basse pression 6. Ce dernier communique, du côté de la première extrémité du module 3, avec une conduite 10 de décharge dans l'atmosphère environnante et, au voisinage de la seconde extrémité du module 3, avec une portion de conduit 11 communiquant avec la partie supérieure du volume 2 et pourvu d'un clapet anti-retour 12.

Avec cet agencement, le premier mélange gazeux modifié, typiquement un mélange d'inertage pauvre en oxygène et constitué essentiellement d'azote, introduit dans le volume 2 de l'enceinte 1 pour y constituer une atmosphère contrôlée, s'échappe de cette dernière, légèrement modifié dans sa composition par les produits résidant dans l'enceinte, par le conduit 11 et la chambre basse pression 6, à contre-courant du flux gazeux parcourant la chambre haute pression 5. L'introduction du mélange d'inertage appauvri en oxygène dans la chambre basse pression 6 abaisse la pression partielle d'oxygène dans cette dernière, ce qui permet ainsi d'améliorer notablement le fonctionnement de la membrane. A titre d'exemple, pour une membrane de sélectivité oxygène/azote de 3;4, réalisée en polyimide, le balayage du compartiment basse pression 6 par la totalité du gaz d'inertage produit et ayant transité dans le volume 2 permet, pour une même production de ce gaz d'inertage, à la même pureté d'environ 99 %, de réduire la surface nécessaire de membrane d'environ 25 % et le débit d'air comprimé nécessaire d'environ 20 %. Le mélange gazeux évacué par le conduit de décharge 10 a une composition sensiblement identique à celui (air) introduit dans le raccord 7, avec une teneur en oxygène d'environ 21 %, ce qui supprime ainsi les risques qui pourraient être dûs, sans recombinaison, à une suroxygénation du local environnant l'enceinte, notamment d'incendie, ou dûs à un rejet trop important de gaz d'inertage, notamment d'anoxie.

Avec un tel agencement, le module de séparation 3 permet par ailleurs un recyclage des vapeurs ou arômes dégagés par les produits entreposés dans l'enceinte 1. D'autre part, si l'enceinte 1 est maintenue à une température (chaude ou froide) différente de la température ambiante, le module 3 assure une fonction d'échange de chaleur entre le mélange gazeux injecté et le mélange extrait de l'enceinte, ce qui permet de réduire la consommation énergétique de l'ensemble de stockage.

Dans la pratique, le volume intérieur 2 de l'enceinte 1 est maintenu à une pression faible et le fait que le premier mélange gazeux modifié, typiquement d'inertage, issu du compartiment haute pression du module de séparation soit utilisé à une pression peu supérieure à la pression atmosphérique permet de simplifier considérablement la construction du module membranaire.

On a représenté sur la figure 2 un tel mode de réalisation simplifié où le premier mélange gazeux modifié est détendu par la membrane elle-même, en l'occurrence constituée par une pluralité de faisceaux de fibres creuses 4, par exemple en polyimide, chaque faisceau de fibres creuses étant inséré, par une de ses extrémités, dans un orifice 13 formé dans un tube collecteur 14, par exemple en PVC ou en polyéthylène armé, l'étanchéité au niveau des orifices étant obtenue par l'application contrôlée de résine époxyde (au trempé, par badigeon ou par injection sous pression via le tube 14). Le tube 14 et les faisceaux de fibres 4 sont disposés dans un boîtier 15 monté dans le volume intérieur 2 de l'enceinte 1 et dont deux cloisons parallèles 16 et 17 définissent respectivement une chambre 6, recevant le tube 14 et les faisceaux de fibres 4 et formant le compartiment basse pression du module, et une chambre ou une série de conduits 11 établissant la communication entre la partie supérieure du volume intérieur 2 et le bas de la chambre 6 via un volet pivotant formant clapet anti-retour 12. Le tube 14 est déposé dans la partie supérieure de la chambre 6 et les fibres 4 s'étendent vers le bas jusqu'au delà d'un fond 18 du boîtier 15 qui définit, avec le fond de l'enceinte 1, un passage 8 établissant la communication entre les extrémités de sortie des fibres 4, se terminant dans le passage 8, et le volume 2. Le tube collecteur 14 est relié à une extrémité de l'enceinte à un raccord 7 de connection à une source d'air sous pression, son autre extrémité étant fermée hermétiquement. La paroi supérieure de la chambre 6 est percée d'une ou plusieurs ouvertures 10 formant orifice de décharge vers l'atmosphère environnante du module de perméation.

Dans une variante de réalisation, pour optimiser la séparation gazeuse avec le faisceau de fibres 4, les cloisons définissant la chambre 6 sont agencées de façon que la section transversale de cette dernière diminue progressivement de haut en bas, c'est-à-dire depuis le tube collecteur 14 jusqu'au passage rétréci inférieur recevant les extrémités libres des fibres.

On comprendra que, dans ces modes de réalisation, la longueur et le diamètre des fibres creuses 4, qui définissent intérieurement le compartiment haute pression du module, déterminent la composition du premier mélange gazeux produit pour une pression d'alimentation donnée, ainsi que la pression réduite de délivrance de ce premier mélange gazeux, ce qui permet de supprimer le compartiment étanche sous pression du côté de la production du premier mélange gazeux classiquement rencontré dans les cartouches à fibres creuses traditionnelles.

## Revendications

1. Procédé de constitution, dans une enceinte (1), d'une atmosphère contrôlée, comprenant les étapes de fournir un mélange gazeux sous pression à un premier compartiment (5) d'un module de séparation membranaire (3), de faire circuler dans l'enceinte un premier des mélanges gazeux modifiés issu (8) du module pour constituer l'atmosphère contrôlée, et de recombiner l'atmosphère contrôlée extraite de l'enceinte avec le second des mélanges modifiés émanant du module avant rejet (10) dans l'atmosphère environnante, caractérisé en ce que la recombinaison est effectuée dans le second compartiment (6) du module (3).

2. Procédé selon la revendication 1, caractérisé en ce que le second compartiment (6) est le compartiment basse pression du module (3).

3. Procédé selon la revendication 2, caractérisé en ce que le premier mélange modifié est détendu (9) à une pression légèrement supérieure à la pression du compartiment basse pression (6) du module (3).

4. Procédé selon la revendication 3, caractérisé en ce qu'on fait circuler l'atmosphère contrôlée extraite de l'enceinte (1) dans le compartiment basse pression (6) du module (3) à contre-courant du flux dans le compartiment haute pression (5) du module (3).

5. Procédé selon l'une des revendications précédentes, caractérisé en ce que le premier mélange gazeux modifié est appauvri en oxygène.

6. Enceinte, comprenant au moins un volume intérieur (2) relié, par un premier conduit (8), à un premier compartiment (5) d'un module de séparation membranaire (3) connectable (7) à une source de mélange gazeux sous pression, et, par un second conduit (11, 6), à un orifice (10) de décharge dans l'atmosphère environnante communiquant avec le second compartiment (6) du module, caractérisée en ce que le second conduit (11, 6) est constitué au moins partiellement par le second compartiment (6) du module (3).

7. Enceinte selon la revendication 6, caractérisée en ce que le premier conduit (8) est relié à une extrémité du module (3) opposée à l'arrivée (7, 14) du mélange gazeux sous pression, et en ce que le volume intérieur (2) est relié au second compartiment (6) du module (3) par une portion de second conduit (11) débouchant dans le second compartiment au voisinage de ladite extrémité du module.

8. Enceinte selon la revendication 7, caractérisée en ce que la portion de second conduit (11) comprend un clapet anti-retour (12).

9. Enceinte selon l'une des revendications 6 à 8, caractérisée en ce que le module (3) comprend un boîtier (15) définissant une première chambre (6) communiquant, à une extrémité, avec un orifice de décharge (10) et, à l'autre extrémité, avec des premier (8) et second (11) passages, et renfermant un col lecteur (14), disposé au voisinage de la première extrémité, connectable (7) à la source de gaz sous pression et à partir duquel s'étend, jusqu'au premier passage (8), au moins un faisceau de fibres de perméation (4).

10. Enceinte selon la revendication 9, caractérisée en ce que le faisceau de fibres (4) est connecté de façon étanche, par une de ses extrémités, au collecteur (14) et s'étend librement jusqu'au premier passage (8).

## Claims

1. Process for forming, in a chamber (1), a controlled atmosphere, comprising the steps of supplying a pressurised gas mixture to a first compartment (5) of a membrane separation unit (3), circulating in the chamber a first one of the modified gas mixtures coming (8) from the unit to constitute the controlled atmosphere, and recombining the controlled atmosphere extracted from the chamber with the second one of the modified mixtures emanating from the unit before discharge (10) into the surrounding atmosphere, characterised in that the recombination is effected in the second compartment (6) of the unit (3).

2. Process according to Claim 1, characterised in that the second compartment (6) is the low-pressure compartment of the unit (3).

3. Process according to Claim 2, characterised in that the first modified mixture is held (9) at a pressure slightly higher than the pressure in the low-pressure compartment (6) of the unit (3).

4. Process according to Claim 3, characterised in that the controlled atmosphere extracted from the chamber (1) is circulated in the low-pressure compartment (6) of the unit (3) in the opposite direction to the flow in the high-pressure compartment (5) of the unit (3).

5. Process according to one of the preceding claims, characterised in that the first modified gas mixture has a low oxygen content.

6. Chamber comprising at least one internal space (2) connected, by means of a first pipe (8), to a first compartment (5) of a membrane separation unit (3) connectable (7) to a source of pressurised gas mixture and, by means of a second pipe (11, 6), to a discharge orifice (10) into the surrounding atmosphere communicating with the second compartment (6) of the unit, characterised in that the second pipe (11, 6) is formed at least partially by the second compartment (6) of the unit (3).

7. Chamber according to Claim 6, characterised in that the first pipe (8) is connected to one end of the unit (3) opposite to the inlet (7, 14) for the pressurised gas mixture, and in that the internal space (2) is connected to the second compartment (6) of the unit (3) by a portion of the second pipe (11) opening out into the second compartment in the vicinity of the said end of the unit.

8. Chamber according to Claim 7, characterised in that the portion of the second pipe (11) comprises a non-return valve (12).

9. Chamber according to one of Claims 6 to 8, characterized in that the unit (3) comprises a casing (15) defining a first chamber (6) communicating, at one end, with a discharge orifice (10) and, at the other end, with first (8) and second (11) passages, and containing a manifold (14), disposed in the vicinity of the first end, connectable (7) to the source of pressurised gas and from which extends, as far as the first passage (8), at least one cluster of permeation fibres (4).

10. Chamber according to Claim 9, characterised in that the cluster of fibres (4) is connected sealingly, by one of its ends, to the manifold (4) and extends freely as far as the first passage (8).

## Patentansprüche

1. Verfahren zum Erzeugen einer kontrollierten Atmosphäre in einer Kammer (1) mit den Schritten: Liefern eines unter Druck stehenden Gasgemisches in einen ersten Teilraum (5) eines Membrantrennmodulz (3), Umwälzen eines ersten von zwei modifizierten Gasgemischen in dem Raum, das zum Erzeugen der kontrollierten Atmosphäre aus dem Modul ausgegeben wird (8), und Wiedervereinigen der aus der Kammer abgezogenen kontrollierten Atmosphäre mit dem aus dem Modul austretenden zweiten der modifizierten Gemische vor dem Auslassen (10) in die Umgebungsatmosphäre, dadurch gekennzeichnet, daß die Wiedervereinigung im zweiten Teilraum (6) des Moduls (3) ausgeführt wird.

2. Verfahren nach Anspruch 1, dadurch gekennzeichnet, daß der zweite Teilraum (6) der Niederdruckteilraum des Moduls (3) ist.

3. Verfahren nach Anspruch 2, dadurch gekennzeichnet, daß das erste modifizierte Gemisch auf einen Druck entspannt wird (9), der geringfügig höher ist als der Druck im Hochdruckteilraum (6) des Moduls (3).

4. Verfahren nach Anspruch 3, dadurch gekennzeichnet, daß die aus der Kammer (1) abgezogene kontrollierte Atmosphäre im Niederdruckteilraum (6) des Moduls (3) entgegengesetzt gerichtet zur Strömung im Hochdruckteilraum (5) des Moduls (3) umgewälzt wird.

5. Verfahren nach einem der vorangehenden Ansprüche, dadurch gekennzeichnet, daß das erste modifizierte Gasgemisch sauerstoffabgereichert ist.

6. Kammer mit zumindest einem Innenvolumen (2), das durch eine erste Leitung (8) mit einem ersten Teilraum (5) eines Membrantrennmoduls (3) verbunden ist, der mit einer unter Druck stehenden Gasgemischquelle verbindbar ist (7) und durch eine zweite Leitung (11, 6) mit einer Öffnung (10) zum Auslaß in die Umgebungsatmosphäre, die mit dem zweiten Teilraum (6) des Moduls kommuniziert, dadurch gekennzeichnet, daß die zweite Leitung (11, 6) zumindest teilweise durch den zweiten Teilraum (6) des Moduls (3) gebildet ist.

7. Kammer nach Anspruch 6, dadurch gekennzeichnet, daß die erste Leitung (8) mit einem Ende des Moduls (3) verbunden ist, das dem Einlaß (7, 14) für das unter Druck stehende Gasgemisch gegenüberliegt, und daß das Innenvolumen (2) mit dem zweiten Teilraum (6) des Moduls (3) durch einen Bereich der zweiten Leitung (11) verbunden ist, der in den zweiten Teilraum benachbart zu dem Ende des Moduls mündet.

8. Kammer nach Anspruch 7, dadurch gekennzeichnet, daß der Bereich der zweiten Leitung (11) eine Rückschlagklappe (12) umfaßt.

9. Kammer nach einem der Ansprüche 6 bis 8, dadurch gekennzeichnet, daß der Modul (3) ein Gehäuse (15) umfaßt, das einen ersten Raum (6) bildet, der an einem Ende mit einer Auslaßöffnung (10) und am anderen Ende mit ersten (8) und zweiten (11) Durchlässen kommuniziert und einen Sammelkanal (14) umschließt, der benachbart zum ersten Ende angeordnet, an die Druckgasquelle anschließbar ist (7), und von dem ausgehend sich bis zum ersten Durchlaß (8) zumindest ein Permeationsfasernetz (4) erstreckt.

10. Kammer nach Anspruch 9, dadurch gekennzeichnet, das das Fasernetz (4) über eines seiner Enden mit dem Sammelkanal (14) dicht verbunden ist und sich bis zum ersten Durchlaß (8) frei erstreckt.
